# EUROPEAN PATENT APPLICATION

(11) **EP 4 539 535 A1**
(43) Date of publication of application: **16.04.2025**
(21) Application number: 23823014.8
(22) Date of filing: 08.06.2023
(51) Int. Cl.: H04W 28/02

(54) **INFORMATION PROCESSING METHOD AND COMMUNICATION DEVICE**

(30) Priority: 13.06.2022 CN 202210666342
(71) Applicant: Vivo Mobile Communication Co., Ltd., Dongguan, Guangdong 523863 (CN)
(72) Inventor: KE, Xiaowan, Dongguan, Guangdong 523863 (CN)
(74) Representative: Michalski Hüttermann & Partner Patentanwälte mbB
(86) International application number: PCT/CN2023/099101
(87) International publication number: WO 2023/241446

(57) **Abstract**

Embodiments of this application provide an information processing method and a communication device and pertain to the field of wireless communication technologies. The information processing method applied to a first communication device includes: obtaining, by a first communication device, first information, where the first information includes at least one of the following: a first delay budget and second core network delay information; and performing, by the first communication device, a first operation based on the first information, where the first operation includes at least one of the following: determining the second core network delay information; determining a first access network delay budget; performing an operation based on the first access network delay budget or the first delay budget; sending the first access network delay budget; determining a second access network delay budget of data packets in a data packet set; and performing an operation based on the second access network delay budget or a second delay budget; where the second core network delay information includes one of the following: the second core network delay budget and a second core network delay.

## Description

### CROSS-REFERENCE TO RELATED APPLICATIONS

This application claims priority to Chinese Patent Application No. 202210666342.1 filed in China on June 13, 2022, which is incorporated herein by reference in its entirety.

### TECHNICAL FIELD

Embodiments of this application relate to the field of wireless communications technologies, and in particular, to an information processing method and a communication device.

### BACKGROUND

A data packet set delay budget (PDU Set Delay Budget, PSDB) is different from a data packet delay budget (Packet Delay Budget, PDB). The PDB is a delay budget of a single data packet and the PSDB is a delay budget of a group of data packets, that is, a time for transmission from the 1st data packet of a data packet set (PDU Set) to the last data packet cannot exceed the PSDB.

A radio access network (Radio Access Network, RAN) is responsible for ensuring an air interface delay between the RAN and user equipment (User Equipment, UE). A PDB in related technologies is a delay budget in a 5G system (5G System, 5GS), and how to ensure a PSDB for the RAN and the terminal still needs to be resolved.

### SUMMARY

Embodiments of this application provide an information processing method and a communication device, so as to resolve the problem of how to ensure delay budget performance of a data packet set.

According to a first aspect, an information processing method is provided, including:
obtaining, by a first communication device, first information, where the first information includes at least one of the following: a first delay budget and second core network delay information; and
performing, by the first communication device, a first operation based on the first information, where the first operation includes at least one of the following:
   determining the second core network delay information;
   determining a first access network delay budget;
   performing an operation based on the first access network delay budget or the first delay budget;
   sending the first access network delay budget;
   determining a second access network delay budget of data packets in a data packet set; and
   performing an operation based on the second access network delay budget or a second delay budget; where
   the second core network delay information includes one of the following: the second core network delay budget (such as a CN PDU Delay Budget) and the second core network delay.

According to a second aspect, an embodiment of the present invention provides an information processing method, including:
obtaining, by a second communication device, second information, where the second information includes at least one of the following: a first delay budget and a first access network delay budget; and
performing, by the second communication device, a second operation based on the second information, where the second operation includes at least one of the following:
   determining a second access network delay budget of a data packet in a data packet set;
   performing an operation based on the first access network delay budget or the first delay budget; and
   performing an operation based on the second access network delay budget or a second delay budget.

According to a third aspect, an information processing method is provided, including:
performing, by a third communication device, a third operation, where the third operation includes at least one of the following:
adding T1 to a header of a data packet of a downlink data packet set; where
T1 is one of the following:
   a sending time at which an anchor gateway sends the 1st data packet of a data packet set to a second target end;
   a receiving time at which the anchor gateway receives the 1st data packet of the data packet set from an N6 interface;
   a time at which the 1st data packet of the data packet set arrives at the anchor gateway;
   a sending time at which the anchor gateway sends the 1st data packet of the downlink data packet set;
   a receiving time at which the anchor gateway receives the 1st data packet of the downlink data packet set;
   a sending time at which the anchor gateway sends a data packet to the second target end;
   a receiving time at which the anchor gateway receives the data packet from the N6 interface;
   a sending time at which the anchor gateway sends a downlink data packet; and
   a receiving time at which the anchor gateway receives the downlink data packet;
   where
   the second target end includes one of the following: a RAN, an N3 interface, and an N9 interface.

According to a fourth aspect, an information processing apparatus is provided, including:
a first obtaining module, configured to obtain first information, where the first information includes at least one of the following: a first delay budget and second core network delay information; and
a first execution module, configured to perform a first operation based on the first information, where the first operation includes at least one of the following:
   determining the second core network delay information;
   determining a first access network delay budget;
   performing an operation based on the first access network delay budget or the first delay budget;
   sending the first access network delay budget;
   determining a second access network delay budget of data packets in a data packet set; and
   performing an operation based on the second access network delay budget or a second delay budget; where
   the second core network delay information includes one of the following: the second core network delay budget and a second core network delay.

According to a fifth aspect, an information processing apparatus is provided, including:
a second obtaining module, configured to obtain second information, where the second information includes at least one of the following: a first delay budget and a first access network delay budget; and
a second execution module, configured to perform a second operation based on the second information, where the second operation includes at least one of the following:
   determining a second access network delay budget of a data packet in a data packet set;
   performing an operation based on the first access network delay budget or the first delay budget; and
   performing an operation based on the second access network delay budget or a second delay budget.

According to a sixth aspect, an information processing apparatus is provided, including:
a third execution module, configured to perform a third operation, where the third operation includes at least one of the following:
adding T1 to a header of a data packet of a downlink data packet set; where
T1 is one of the following:
   a sending time at which an anchor gateway sends the 1st data packet of a data packet set to a second target end;
   a receiving time at which the anchor gateway receives the 1st data packet of the data packet set from an N6 interface;
   a time at which the 1st data packet of the data packet set arrives at the anchor gateway;
   a sending time at which the anchor gateway sends the 1st data packet of the downlink data packet set;
   a receiving time at which the anchor gateway receives the 1st data packet of the downlink data packet set;
   a sending time at which the anchor gateway sends a data packet to the second target end;
   a receiving time at which the anchor gateway receives the data packet from the N6 interface;
   a sending time at which the anchor gateway sends a downlink data packet; and
   a receiving time at which the anchor gateway receives the downlink data packet;
   where
   the second target end includes one of the following: a RAN, an N3 interface, and an N9 interface.

According to a seventh aspect, a communication device is provided, where the communication device includes a processor and a memory, and a program or instructions capable of running on the processor are stored in the memory. When the program or the instructions are executed by the processor, the steps of the method according to the first aspect, the second aspect, or the third aspect are implemented.

According to an eighth aspect, a communication device is provided, including a processor and a communication interface, where the processor is configured to implement the steps of the method according to the first aspect, or the steps of the method according to the second aspect, or the steps of the method according to the third aspect.

According to a ninth aspect, an information processing system is provided, including a first communication device, a second communication device, and a third communication device, where the first communication device can be configured to execute the steps of the method according to the first aspect, the second communication device can be configured to execute the steps of the method according to the second aspect, and the third communication device can be configured to execute the steps of the method according to the third aspect.

According to a tenth aspect, a readable storage medium is provided, where a program or instructions are stored in the readable storage medium; and when the program or the instructions are executed by a processor, the steps of the method according to the first aspect are implemented, or the steps of the method according to the second aspect are implemented, or the steps of the method according to the third aspect are implemented.

According to an eleventh aspect, a chip is provided, where the chip includes a processor and a communication interface, the communication interface is coupled to the processor, and the processor is configured to run a program or instructions to implement the method according to the first aspect, or implement the method according to the second aspect, or implement the method according to the third aspect.

According to a twelfth aspect, a computer program/program product is provided, where the computer program/program product is stored in a storage medium, and the computer program/program product is executed by at least one processor to implement the steps of the method according to the first aspect, or implement the steps of the method according to the second aspect, or implement the steps of the method according to the third aspect.

According to the embodiments of this application, the first communication device obtains at least one of the first delay budget (such as a PSDB) and the second core network delay information. The first access network delay budget (the access network delay budget of the data packet set) may be determined based on at least one of the first delay budget and the second core network delay information, so as to perform an operation on the data packet in the data packet set correspondingly based on the first access network delay budget, thereby ensuring performance of the first delay budget of the data packet set.

### BRIEF DESCRIPTION OF DRAWINGS

FIG. 1 is a block diagram of a wireless communication system to which the embodiments of this application are applicable;
FIG. 2 is a first schematic flowchart of an information processing method according to an embodiment of this application;
FIG. 3 is a schematic diagram of an interface between communication devices according to an embodiment of this application;
FIG. 4 is a first schematic diagram of a data packet transmission time according to an embodiment of this application;
FIG. 5 is a second schematic flowchart of an information processing method according to an embodiment of this application;
FIG. 6 is a second schematic diagram of a data packet transmission time according to an embodiment of this application;
FIG. 7 is a third schematic flowchart of an information processing method according to an embodiment of this application;
FIG. 8 is a first schematic flowchart of interaction of an information processing method according to an embodiment of this application;
FIG. 9 is a second schematic flowchart of interaction of an information processing method according to an embodiment of this application;
FIG. 10 is a first schematic structural diagram of an information processing apparatus according to an embodiment of this application;
FIG. 11 is a second schematic structural diagram of an information processing apparatus according to an embodiment of this application;
FIG. 12 is a third schematic structural diagram of an information processing apparatus according to an embodiment of this application; and
FIG. 13 is a structural diagram of a communication device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that technologies described in the embodiments of this application are not limited to a long term evolution (Long Term Evolution, LTE)/LTE-advanced (LTE-Advanced, LTE-A) system, and may also be used in various wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communications system.

In the specification and claims of this application, the term "include" and any other variants thereof are intended to cover the non-exclusive inclusion, for example, a process, method, system, product, or device that includes a list of steps or units is not necessarily limited to those expressly listed steps or units, but may include other steps or units not expressly listed or inherent to such a process, method, system, product, or device. In addition, in the specification and claims, the use of "and/or" represents presence of at least one of the connected objects, for example, "A and/or B" indicates the following three cases: A alone, B alone, or both A and B.

In the embodiments of this application, the terms "an example" or "for example" are used to represent an example, an illustration, or a description. Any embodiment or design scheme described as "an example" or "for example" in the embodiments of this application should not be construed as being more preferred or advantageous than other embodiments or design schemes. To be precise, the words such as "an example" or "for example" are intended to present a related concept in a specific manner.

Techniques described in this specification are not limited to a 5th generation (5th-generation, 5G) system and a later evolved communications system, and also are not limited to an LTE/LTE-Advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems.

The terms "system" and "network" are usually used interchangeably. The CDMA system can implement radio technologies such as CDMA2000 and Universal Terrestrial Radio Access (Universal Terrestrial Radio Access, UTRA). The UTRA includes wideband CDMA (Wideband Code Division Multiple Access, WCDMA) and other CDMA variants. The TDMA system can implement radio technologies such as the global system for mobile communications (Global System for Mobile Communication, GSM). The OFDMA system can implement radio technologies such as ultra mobile broadband (Ultra Mobile Broadband, UMB), evolved UTRA (Evolution-UTRA, E-UTRA), IEEE802.11 (Wi-Fi), IEEE802.16 (WiMAX), IEEE802.20, and Flash-OFDM. The UTRA and E-UTRA are parts of the universal mobile telecommunications system (Universal Mobile Telecommunications System, UMTS). The LTE and more advanced LTE (such as LTE-A) are new UMTS releases that use the E-UTRA. The UTRA, E-UTRA, UMTS, LTE, LTE-A, and GSM are cited from descriptions of the documentation of the organization named "3rd Generation Partnership Project" (3rd Generation Partnership Project, 3GPP). The CDMA2000 and UMB are cited from descriptions of the documentation of the organization named "3rd Generation Partnership Project 2" (3GPP2). Techniques described in this specification may be used in the aforementioned systems and radio technologies, and can also be used in other systems and radio technologies.

In the embodiments of this application, the following problems need to be solved:
Problem1: It is considered that a scenario of a first delay budget (such as a PSDB) should also be a delay budget in 5GS. Because the number of data packets included in the first delay budget is different, a CN data packet set PDB of each data packet set is different. For the RAN, it cannot be simply understood that subtracting an empirical value of a common CN PDU set delay from the first delay budget obtains a first access network delay budget.

For downlink data: the first access network delay budget (such as an AN PSDB) = the first delay budget - a value corresponding to second core network delay information (such as a second core network delay or a second core network delay budget). In an implementation, the value corresponding to the second core network delay information is a common empirical value and is applicable to all data packet sets. In another implementation, the value corresponding to the second core network delay information is determined based on T2-T1 (a delay of the 1st data packet of a data packet set between the UPF and the RAN), and T2-T1 is a delay of the 1st data packet of each data packet set between the UPF and the RAN. In this implementation, the UPF needs to add T1 to the 1st data packet of the data packet set, and the RAN records T2. Optionally, for any one data packet or the last data packet of the data packet set, a second access network delay budget is determined.

For uplink data: an uplink CN PDU set delay is related to the number of PDUs in a PDU set. A larger number of PDUs in the PDU set indicates a longer CN PDU set delay.

Because uplink PDU sets generated on the UE arrive at a UE modem for scheduling at the same time, PDUs in the PDU set do not arrive one after another, so that the UE can quickly determine a PS Size (the number of packets or bits) of the PDU set. The UE informs the RAN of the PS size. Uplink first access network delay budget = the first delay budget - value corresponding to the second core network delay, so as to ensure an enough delay budget for the last data packet of a PS transmitted between the RAN and the UPF, that is, the last data packet is not late, it is not difficult to understand that the last data packet is not late. Other packages of the PS are neither late, thereby finally achieving the purpose of ensuring the first delay budget. The RAN retrieves uplink data based on the PS size and the first access network delay budget (such as an AN PSDB).

Problem 2: For existing scheduling, the RAN allocates time-frequency resources, and the UE decides which data to send first. The existing UE aims to send data based on priorities of logical channels. One logical channel may contain multiple data packet sets. In addition, the UE needs to determine a sending priority of uplink data based on a first access network delay budget.

In an implementation, the UE directly obtains the first access network delay budget from the RAN or the CN.

In another implementation, the UE obtains a first delay budget (such as a PSDB) from the CN and a second core network delay budget (such as a CN PDB) from the RAN, and the UE calculates a first access network delay budget (such as a PSDB-CN PDB) based on the first delay budget and the second core network delay budget.

In still another implementation, the UE itself determines a first delay budget and obtains a second core network delay budget (such as a CN PDB) from the RAN, and the UE itself calculates a first access network delay budget (such as a PSDB-CN PDB) based on the first delay budget and the second core network delay budget.

Problem 3: Where does the first delay budget on the RAN come from?

There may be multiple data packet sets in one DRB, and a first delay budget of each data packet set may be the same or different. For a first delay budget per data packet set, it can be carried only by inbound signaling in downlink, such as GTP-U; and the UE can send the first delay budget only to the RAN in uplink.

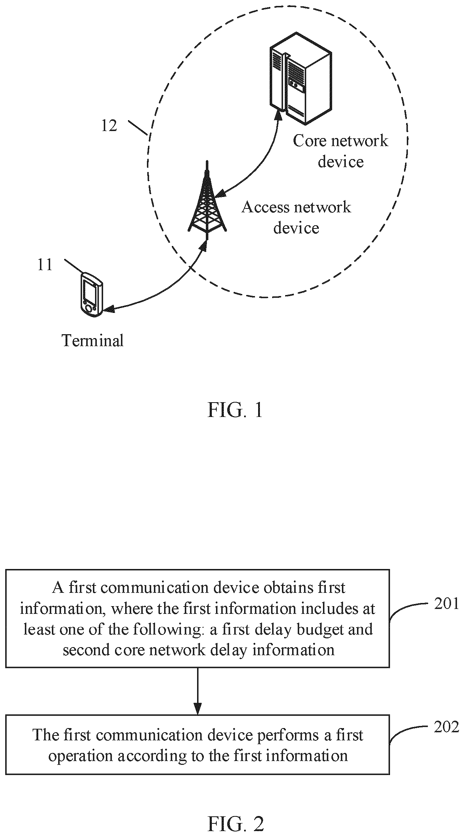

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, game console, and the like. It should be noted that a specific type of the terminal 11 is not limited in the embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Networks, WLAN) access point, a wireless fidelity (Wireless Fidelity, WiFi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application service discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application Function (Application Function, AF), and the like. It should be noted that, in the embodiments of this application, a core network device in an NR system is used as an example for description, and a specific type of the core network device is not limited.

Optionally, obtaining may be understood as acquiring from configuration, receiving, obtaining through receiving upon a request, obtaining through self-learning, obtaining through deduction based on non-received information, or obtaining through processing received information, which may be determined according to actual needs. This is not limited in the embodiments of the present invention. For example, when specific capability indication information sent by a device is not received, it can be deduced that the device does not support such capability.

Optionally, sending may include broadcasting, broadcasting through a system message, or returning a response after receiving the request.

In an optional embodiment of this application, the communication device may include at least one of the following: a communication network element and a terminal.

In an embodiment of this application, the communication network element may include at least one of the following: a core-network network element and a radio access network network element.

In some embodiments of this application, the core-network network element (CN network element) may include but is not limited to at least one of the following: a core network device, a core network node, a core network function, a core-network network unit, a mobility management entity (Mobility Management Entity, MME), an access mobility management function (Access Management Function, AMF), a session management function (Session Management Function, SMF), a user plane function (User Plane Function, UPF), a serving gateway (serving GW, SGW), a PDN gateway (PDN Gate Way, PDN gateway), a policy control function (Policy Control Function, PCF), a policy and charging rules function unit (Policy and Charging Rules Function, PCRF), a serving GPRS support node (Serving GPRS Support Node, SGSN), a gateway GPRS support node (Gateway GPRS Support Node, GGSN), or an application function (Application Function).

In the embodiments of this application, the RAN network element may include but is not limited to at least one of the following: a radio access network device, a radio access network node, a radio access network function, a radio access network element, a 3GPP radio access network, a non-3GPP radio access network, a centralized unit (Centralized Unit, CU), a distributed unit (Distributed Unit, DU), a base station, an evolved NodeB (evolved Node B, eNB), a 5G NodeB (gNB), a radio network controller (Radio Network Controller, RNC), a NodeB (NodeB), a non-3GPP interworking function (Non-3GPP InterWorking Function, N3IWF), an access controller (Access Controller, AC) node, an access point (Access Point, AP) device, a wireless local area network (Wireless Local Area Networks, WLAN) node, or an N3IWF.

A base station may be a base transceiver station (BTS, Base Transceiver Station) in GSM or CDMA, or may be a NodeB (NodeB) in WCDMA, or may be an evolved NodeB (eNB or e-Node B, evolutional Node B) in LTE or a 5G NodeB (gNB), which is not limited in the embodiments of the present invention.

In an optional embodiment of the present invention, the UE may include one of the following: a terminal device, and a terminal device and a card.

In an optional embodiment of the present invention, the card may include one of the following: a subscriber identity module (Subscriber Identity Module, SIM) card, a universal subscriber identity module (Universal Subscriber Identity Module, USIM) card, and an embedded SIM (Embedded-SIM, eSIM) card.

In an optional embodiment of the present invention, the terminal may include a relay supporting terminal functions and/or a terminal supporting relay functions. The terminal may also be referred to as a terminal device or user equipment (User Equipment, UE). The terminal may be a terminal-side device such as a mobile phone, a tablet computer (Tablet Personal Computer), a laptop computer (Laptop Computer), a personal digital assistant (Personal Digital Assistant, PDA), a mobile Internet device (Mobile Internet Device, MID), a wearable device (Wearable Device), or an in-vehicle device. It should be noted that a specific type of the terminal is not limited in the embodiments of the present invention.

In an optional embodiment of this application, the communication network element may include at least one of the following: a core-network network element and a radio access network network element.

In an optional embodiment of this application, a sending time is one of the following: a sending time point and a sending time stamp.

In an optional embodiment of this application, a receiving time is one of the following: a receiving time point and a receiving time stamp.

In an optional embodiment of this application, the data packet is a data packet cached in a second communication device, or the data packet set is a data packet set cached in the second communication device.

In an optional embodiment of this application, a first delay budget of a data packet set is a delay budget actually used when a first operation is performed.

In an optional embodiment of this application, not performing a packet dropping operation includes continuing transmission.

A type of delay-sensitive guaranteed bit rate GBR includes a delay-critical GBR.

In an optional embodiment of this application, a data packet set may be referred to as a data set for short. The data packet set includes one or more data packets. Optionally, the data packet set has a boundary.

In an optional embodiment of this application, the data packet set is a concept in a cellular mobile communication network. The data packet set may be a segment formed by one or more data packets or a collection formed by one or more data packets in a tunnel (such as a QoS flow, a QoS sub-flow, and a radio bearer).

In an optional embodiment of this application, the data packet may be a PDU packet data unit.

In an optional embodiment of this application, the data packet set may be one of the following: a packet data unit set PDU set, one instance of a PDU set, a PDU set type, one instance of the PDU set type, and a data segment or a data packet set in a tunnel (such as a QoS flow, a QoS sub-flow, and a radio bearer).

(1) In an implementation, one type of PDU set may include multiple PDU set instances. One type of PDU set may be identified by a PDU set identifier (such as a QoS identifier at a PDU set level). Multiple different instances of one PDU set may be distinguished by a serial number of a data packet set (such as a PDU set serial number).

(2) In another implementation, one PDU set type may include multiple PDU sets. The PDU set is an instance of the PDU set type. The PDU set type may be identified by a PDU set identifier (such as a QoS identifier at a PDU set level). Multiple different PDU sets of one PDU set type may be distinguished by a serial number of a data packet set (such as a PDU set serial number).

In an optional embodiment of this application, the data packet set type may be one of the following: a packet data unit set (PDU Set), and a tunnel (such as a QoS flow, a QoS sub-flow, and a radio bearer). One data packet set type may correspond to multiple data packet sets. The data packet set is an instance of the data packet set type. The data packet set type may be identified by a data packet set type identifier. The data packet set type identifier is, for example, a QoS identifier of a data packet set level. In this case, multiple data packet sets may be distinguished by serial numbers of the data packet sets.

In an implementation, the one or more data packet sets are of a same type or different types. Different types of data packet sets may be distinguished by identifiers of the data packet sets. Different data packet sets of one type may be distinguished by serial numbers of the data packet sets.

In an optional embodiment of this application, for a PDU set, the PDU set is formed by one or more PDUs, and the PDUs carry payload (such as a frame or a video slice (video slice)) of one information unit generated at the application level. In some implementations, the application layer requires all PDUs in the PDU set to use corresponding information units. In other implementations, when some PDUs are lost, the application layer can still recover all or part of the information unit.

In an optional embodiment of this application, a first delay budget (such as a PSDB) is used to indicate a delay budget of one data packet set transmitted between a terminal and an anchor gateway (that is, a gateway that terminates an N6 interface) (that is, a time for transmission from the 1st data packet of the data packet set to the last data packet cannot exceed the first delay budget). Optionally, the first delay budget further includes at least one of the following: a residence time (such as a time waiting for scheduling) of the data packet set in the terminal and a residence time of the data packet in the anchor gateway. The first delay budget can also be described as a data packet set delay budget.

In an optional embodiment of this application, the first delay budget or the data packet delay budget includes a packet set delay budget (such as PSDB, PDU set delay budget). In an optional embodiment of this application, the PSDB refers to a delay budget of a group of data packets or one data packet set.

In an implementation, the PSDB is used to indicate an upper bound of a time that one PDU set may be delayed between the UE and the anchor gateway (that is, the gateway that terminates the N6 interface) (that is, a time for transmission from the 1st data packet of the PDU set to the last data packet cannot exceed the PSDB). For a specific QoS identifier (such as a 5QI), a value of the PSDB may be different or the same in uplink and downlink.

In an optional embodiment of this application, the PSDB refers to a delay budget of a group of data packets or one data packet set.

In an optional embodiment of this application, a first access network delay budget (such as an AN PSDB) may refer to one of the following: a delay budget for transmission of one data packet set between the terminal and the RAN network element, and a value obtained by subtracting second core network delay information from a delay budget for transmission of one data packet set between the terminal and the anchor gateway. Optionally, the first access network delay budget further includes at least one of the following: a residence time (such as a time waiting for scheduling) of the data packet set in the terminal and a residence time of the data packet in the RAN network element.

In an optional embodiment of this application, a second delay budget (such as a PDB) is used to indicate a delay budget for transmission of one data packet between the terminal and the anchor gateway (that is, the gateway that terminates the N6 interface). Optionally, the second delay budget further includes at least one of the following: a residence time (such as a time waiting for scheduling) of the data packet in the terminal and a residence time of the data packet in the anchor gateway. The second delay budget can also be described as a data packet delay budget.

The data packet delay budget includes a packet delay budget (PDB). In an optional embodiment of this application, the PDB refers to a delay budget of a single data packet.

In an implementation, the PDB is used to indicate an upper limit of a time that one PDU may be delayed between the UE and the anchor gateway (that is, the gateway that terminates the N6 interface). The PDB may be applied to downlink packets received by the anchor gateway (such as a UPF) through the N6 interface and uplink packets sent by the terminal. For a specific QoS identifier (such as a 5QI), a value of the PDB may be the same in uplink and downlink.

In an optional embodiment of this application, a second access network delay budget (such as an AN PDB) may refer to one of the following: a delay budget for transmission of one data packet between the terminal and the RAN network element, and a value obtained by subtracting second core network delay information from a delay budget for transmission of one data packet between the terminal and the anchor gateway. Optionally, the second access network delay budget further includes at least one of the following: a residence time (such as a time waiting for scheduling) of the data packet in the terminal and a residence time of the data packet in the RAN network element.

In an optional embodiment of this application, a second core network delay budget (such as a CN PDB) is used to indicate a delay budget for transmission of one data packet between the radio access network RAN and the anchor gateway. The second core network delay budget can also be described as a core network delay budget of the data packet. Optionally, the second core network delay information further includes at least one of the following: a residence time of the data packet in the anchor gateway and a residence time of the data packet in the RAN network element.

The configuration of scheduling and/or link layer functions includes at least one of the following: setting a scheduling priority weight and a HARQ target operating point.

In an optional embodiment of this application, the 1st data packet of a data packet set may be one of the following: a data packet with a serial number being the first in the data packet set, and a data packet that arrives first in the data packet set.

In an optional embodiment of this application, the last data packet of the data packet set may be one of the following: a data packet with a serial number being the last in the data packet set and a data packet that arrived last in the data packet set.

In an optional embodiment of this application, a data packet at the tail of the data packet set may be one of the following: a data packet with a serial number being at the tail of the data packet set and a data packet with an arrival time being at the tail in the data packet set.

In an optional embodiment of that present invention, the tunnel include at least one of the following: a session (session) (such as a PDU session or a session between a RAN and a CN), a QoS flow, a QoS sub-flow, an evolved data packet system (Evolved Data packet System, EPS) bearer, a PDP context, a DRB, a signalling radio bearer (Signalling Radio Bearer, SRB), IPSec association, and a GPRS tunneling protocol (GPRS Tunneling Protocol, GTP) tunnel (tunnel). The tunnel may be instantiated as any of the above types of tunnels.

In an optional embodiment of this application, an N6 interface is an interface between a communication system and a data network (such as a data network outside the communication system).

In an optional embodiment of this application, an N3 interface is a user plane interface between the RAN and the CN.

In an optional embodiment of this application, an N9 interface is a user plane interface between gateways.

In an optional embodiment of this application, a Uu interface is an interface between the terminal and the RAN.

In an optional embodiment of this application, a data flow includes a service data flow (such as a service data flow). The data flow may be referred to as a flow or a data flow. Optionally, the data unit is a data unit in a service data flow.

In an optional embodiment of this application, the data unit is also a collection of one or more data packets in the service data flow. Optionally, the data unit has a boundary.

In an optional embodiment of this application, the data unit may be embodied by a data flow, for example, the data unit is described using description information of the data flow.

In an optional embodiment of the present invention, the data unit is an application layer data unit, which is sent by an application client or an application server. A data unit is a collection of one or more data packets.

In an optional embodiment of this application, the data unit or data unit type includes but is not limited to at least one of the following: a GOP (Group of pictures, GoP or GOP), a video frame, a video slice, description information of tile, a field of view (Field of View, FOV), a depth of field (Depth of Field, DOF), an audio frame, and haptic information. A plurality of data unit types are the same (such as a plurality of continuous B frames) or different (such as an I frame, a P frame, and a B frame). A plurality of data unit types are the same (such as a plurality of continuous B frames) or different (such as an I frame, a P frame, and a B frame).

(1) In an implementation, one data unit may include multiple data unit instances. One data unit may be identified by description information of the data unit. A plurality of different data unit instances of a same data unit may be distinguished by boundary information of the data unit (such as a start tag and an end tag).

(2) In an implementation, one data unit type may include multiple data units. The data unit is an instance of the data unit type. One type of data unit may be identified by description information of the data unit. A plurality of different data units of a same data unit type may be distinguished by boundary information (such as a start tag and an end tag) of the data units.

The following describes the information processing method in the embodiments of this application.

Referring to FIG. 2, an embodiment of this application provides an information processing method, being executed by a first communication device. The first communication device includes, but is not limited to, a RAN, UE, a session management function (Session Management Function, SMF), and a policy control function (Policy Control Function, PCF). The method includes the following steps.

Step 201: The first communication device obtains first information, where the first information includes at least one of the following: a first delay budget (such as a PSDB) and second core network delay information.

Step 202: The first communication device performs a first operation according to the first information, where the first operation includes at least one of the following:
determining the second core network delay information;
determining a first access network delay budget;
performing an operation on a data packet (which may be any data or the last data packet) of a data packet set or the data packet set based on the first access network delay budget or the first delay budget;
sending the first access network delay budget;
determining a second access network delay budget of a data packet (which may be any data or the last data packet) in the data packet set; and
performing an operation based on the second access network delay budget or a second delay budget; where
the second core network delay information includes one of the following: the second core network delay budget (such as a CN PDU Delay Budget) and the second core network delay.

In an implementation, the first communication device obtains the first information from a first source device, and the first source device includes at least one of the following: an AMF, an SMF, a PCF, and an AF.

In an implementation, the first communication device sends the first access network delay budget to a first target device, and the first target device includes a terminal or a second communication device.

In an implementation, the obtaining the first delay budget includes one of the following: receiving the first delay budget; or receiving a QoS identifier (such as a standardized QoS identifier, for example, 5QI corresponding to a QoS flow and 5QI corresponding to a data packet set), and obtaining the first delay budget based on a first delay budget mapped by the QoS identifier.

In an implementation, the performing an operation based on the first access network delay budget or the first delay budget includes performing an operation on a data packet of the data packet set or the data packet set based on the first access network delay budget or the first delay budget.

In an implementation, the performing an operation based on the second access network delay budget or the second delay budget includes performing an operation on a data packet of the data packet set based on the second access network delay budget or the second delay budget.

Optionally, the first delay budget is a delay budget of a data packet set;
the first access network delay budget is an access network delay budget of the data packet set;
the second delay budget is a delay budget of a data packet;
the second access network delay budget is an access network delay budget of the data packet;
the second core network delay budget is a core network delay budget of a data packet; and
the second core network delay is a core network delay of one of the following data packets.

In an implementation, the delay budget of the data packet set may be expressed as a delay budget at the granularity of data packet set.

The access network delay budget of the data packet set may be expressed as an access network delay budget at the granularity of data packet set.

The delay budget of the data packet may be expressed as a delay budget at the granularity of data packet.

The access network delay of the data packet may be expressed as an access network delay budget at the granularity of data packet.

The core network delay budget of the data packet may be expressed as a core network delay budget at the granularity of data packet.

The core network delay at the granularity of data packet may be expressed as a core network delay of a data packet.

In an implementation, the first core network delay budget (the core network delay budget of the data packet set) is the second core network delay budget (the core network delay budget at the granularity of data packet).

Optionally, the first delay budget (such as a PSDB) or the delay budget of the data packet set is used to indicate a delay budget for transmission of one data packet set between a terminal and an anchor gateway.

The first access network delay budget (such as an AN PSDB) or the access network delay budget of the data packet set is used to indicate one of the following: a delay budget for transmission of one data packet set between the terminal and a RAN network element, and a value obtained by subtracting the second core network delay information from the first delay budget;
the second delay budget (such as a PDB) or the delay budget of the data packet is used to indicate a delay budget for transmission of one data packet between the terminal and the anchor gateway;
the second access network delay budget (such as an AN PDB) or the access network delay budget of the data packet is used to indicate one of the following: a delay budget for transmission of one data packet between the terminal and the RAN network element, and a value obtained by subtracting the second core network delay information from the second delay budget;
the second core network delay budget or the core network delay budget of the data packet is used to indicate a delay budget (such as a CN PDB) for transmission of one data packet between the RAN network element and the anchor gateway; and
the second core network delay or the core network delay of the data packet is used to indicate a time required for transmission of one data packet between the RAN network element and the anchor gateway.

In an implementation, the second core network delay or the core network delay of the data packet may further include an average second core network delay and/or a maximum second core network delay.

In an implementation, the core network delay of the data packet may further include an average core network delay of the data packet and/or a maximum core network delay of the data packet.

In an implementation, an average second core network delay or an average core network delay of a data packet is used to indicate an average time required for transmission of one data packet between the radio access network RAN and the anchor gateway.

In an implementation, a maximum second core network delay or a maximum core network delay of a data packet is used to indicate a maximum time required for transmission of one data packet between the radio access network RAN and the anchor gateway.

Optionally, the second core network delay information is one of the following:
second core network delay information of the 1st data packet of a data packet set;
second core network delay information of the last data packet of the data packet set; and
second core network delay information of any data packet in a tunnel or data flow.

In an implementation, second core network delay information of the 1st data packet of a downlink data packet set is core network delay information of the data packet set.

In an implementation, second core network delay information of the last data packet of an uplink data packet set is core network delay information of the data packet set.

Optionally, the determining the first access network delay budget based on the first information includes:
determining the first access network delay budget based on a value obtained by subtracting the second core network delay information from the first delay budget.

In an implementation, the first access network delay budget is one of the following: a value obtained by subtracting the second core network delay information from the first delay budget, and a value obtained by subtracting the second core network delay information from the first delay budget plus one hysteresis or extended range value.

Optionally, in the method in this embodiment of this application, the determining the second core network delay information includes one of the following:
determining the second core network delay information based on a value obtained by subtracting T1 from T2;
determining the second core network delay information based on an average or maximum value of second core network delays obtained through measurement; and
determining the second core network delay information based on pre-configured second core network delay information.

In an implementation, the second core network delay budget or a value of the second core network delay is one of the following: a value obtained by subtracting T1 from T2, an average or maximum value of the measured core network delays of the data packet, the pre-configured second core network delay information, a value obtained by subtracting T1 from T2 plus one hysteresis or extended range value, the average or maximum value of the measured core network delays of the data packet plus one hysteresis or extended range value, and the pre-configured second core network delay information plus one hysteresis or extended range value.

Optionally, the pre-configured second core network delay information is a static value or a dynamic value. The pre-configured second core network delay information may be second core network delay information corresponding to a QoS identifier (such as a 5QI) of a QoS flow.

In an implementation, the measured second core network delay is a measured second core network delay of a data packet in a tunnel (such as a QoS flow and a radio bearer).

T1 is one of the following:
a sending time at which an anchor gateway sends the 1st data packet of a data packet set to a second target end;
a receiving time at which the anchor gateway receives the 1st data packet of the data packet set from an N6 interface;
a time at which the 1st data packet of the data packet set arrives at the anchor gateway;
a sending time at which the anchor gateway sends the 1st data packet of a downlink data packet set;
a receiving time at which the anchor gateway receives the 1st data packet of the downlink data packet set;
a sending time at which the anchor gateway sends a data packet to the second target end;
a receiving time at which the anchor gateway receives the data packet from the N6 interface;
a sending time at which the anchor gateway sends a downlink data packet; and
a receiving time at which the anchor gateway receives the downlink data packet.

T2 is one of the following:
a receiving time at which the RAN network element receives the 1st data packet of a data packet set from a first source end;
a receiving time at which the RAN network element receives the 1st data packet of a downlink data packet set,
a receiving time at which the RAN network element receives a data packet from the first source end; and
a receiving time at which the RAN network element receives a downlink data packet;
where
the second target end includes one of the following: a RAN, an N3 interface, and an N9 interface; and
the first source end includes one of the following: an N3 interface and a gateway (such as a UPF).

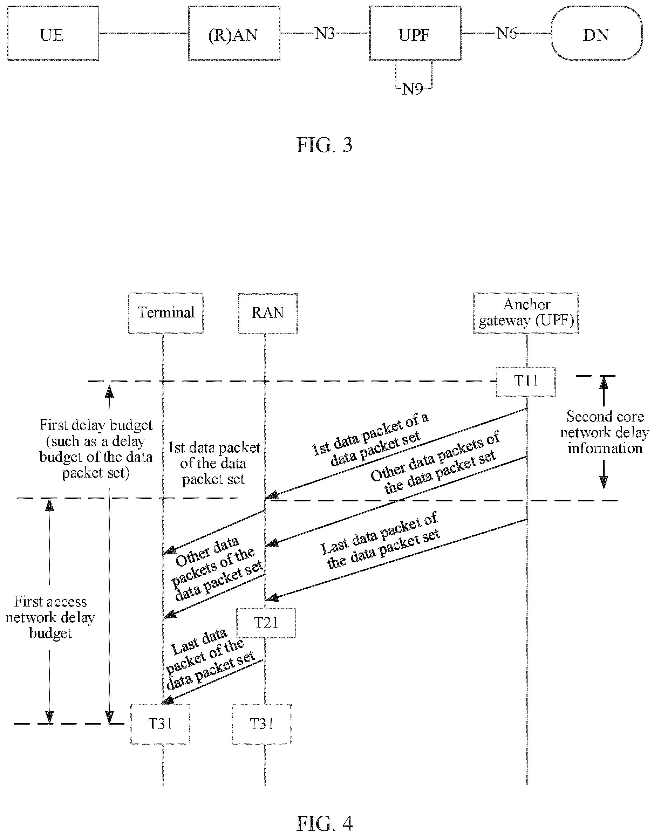

As shown in FIG. 3, the N3 interface is a user plane interface between the RAN and the CN, the N9 interface is a user plane interface between gateways, and the N6 interface is an interface between a communication system and a data network (such as a data network outside the communication system).

Optionally, in this embodiment of this application, the following is further included:
obtaining T1 based on a data packet (such as header information) in the downlink data packet set;
where
the data packet in the data packet set carries T1; and
the data packet in the data packet set is one of the following: the 1st data packet of the data packet set, and any one or more data packets of the data packet set.

Optionally, the determining the second access network delay budget of the data packet in the data packet set (refer to FIG. 4) includes at least one of the following:
determining a second access network delay budget of a first target data packet based on a value obtained by subtracting a first duration value from the first delay budget;
determining the second access network delay budget of the first target data packet based on a value obtained by subtracting a second duration value and the second core network delay information from the first delay budget (refer to FIG. 4);
determining the second access network delay budget of the first target data packet based on a value obtained by subtracting the second duration value from the first access network delay budget;
determining a second access network delay budget of the 1st data packet of a first data packet set based on a first access network delay; and
determining a second access network delay of the first target data packet based on the first access network delay;
where
the first target data packet is a data packet in the first data set;
the first duration value is determined based on a value obtained by subtracting T11 from T31; and
the second duration value is determined based on a value obtained by subtracting T21 from T31.

T11 is one of the following:
a sending time at which an anchor gateway sends the 1st data packet of the first data packet set;
a receiving time at which the anchor gateway receives the 1st data packet of the first data packet set; and
a time at which the 1st data packet of the first data packet set arrives at the anchor gateway.

T21 is one of the following:
a receiving time at which the first communication device receives the 1st data packet of the first data packet set; and
a time at which the 1st data packet of the first data packet set arrives at the first communication device.

T31 is one of the following:
a receiving time at which the first communication device receives the first target data packet; and
a time at which the first target data packet arrives at the first communication device.

In an implementation, because all data packets of the first data packet set arrive at the first communication device together, T31 is the same as T21. In this case, the second access network delay budget of any one data packet of the first data set is the first access network delay budget.

Optionally, the first data packet set is any one data packet set or any one data packet set instance. In an implementation, the first data packet set is one of the following: a data packet set in the downlink direction and a data packet set in the uplink direction.

In an implementation, the receiving time at which the first communication device (such as the RAN and UE) receives the 1st data packet in the first data packet set includes a receiving time at which the first communication device receives the 1st data packet in the first data packet set from the first source end.

In an implementation, T31 is a receiving time at which the first communication device receives the first target data packet, including a receiving time at which the first communication device receives the 1st data packet in the first data packet set from the first source end.

In an implementation, the sending time at which the anchor gateway sends the 1st data packet of the first data packet set includes a sending time at which the anchor gateway sends the 1st data packet in the first data packet set to the second target end. It is not difficult to understand that in this case, the first data packet set is a data packet set in the downlink direction.

In an implementation, the receiving time at which the anchor gateway receives the 1st data packet of the first data packet set includes a receiving time at which the anchor gateway receives the 1st data packet in the first data packet set from the N6 interface. It is not difficult to understand that in this case, the first data packet set is a data packet set in the downlink direction.

In an implementation, the first duration value is one of the following: a value obtained by subtracting T11 from T31, and a value obtained by subtracting T11 from T31 plus one hysteresis or extended range value.

In an implementation, the second duration value is one of the following: a value obtained by subtracting T21 from T31, and a value obtained by subtracting T21 from T31 plus one hysteresis or extended range value.

In an implementation, the second access network delay budget of the 1st data packet of the first data packet set is the first access network delay. Because all data packets of the first data packet set arrive at the first communication device together, T31 is the same as T21. In this case, the second access network delay budget of any one data packet of the first data set is the first access network delay budget.

In an optional embodiment of this application, the first target data packet is one of the following: the last data packet in the first data packet set, any one data packet in the first data packet set other than the 1st data packet, and any one data packet in the first data packet set.

Optionally, the performing an operation based on the first access network delay budget or the first delay budget includes at least one of the following items:
item 1: based on a first delay budget or a first access network delay budget of the data packet set, determining at least one of the following for a data packet in the data packet set or the data packet set: a scheduling priority, a scheduling weight, a sending priority, and a sending weight;
item 2: based on a remaining duration of the first delay budget of the data packet set or a remaining duration of the first access network delay budget, determining at least one of the following for a data packet in the data packet set or the data packet set: a scheduling priority, a scheduling weight, a sending priority, and a sending weight;
item 3: configuring a link layer function based on the first delay budget or the first access network delay budget of the data packet set; and
item 4. starting counting for the first delay budget or the first access network delay budget from a time at which the 1st data packet of a data set or a target data packet arrives at the first communication device.

It should be noted that item 1 may specifically include content of item 2.

In an optional embodiment of this application, the data set is regarded as a whole, and a scheduling priority of remaining data packets in the data set is determined based on a remaining time (remaining scheduling time) of a first delay budget of the data set or a remaining time of the first delay budget. A shorter remaining duration of the first delay budget of the data packet set or a shorter remaining duration of the first access network delay budget indicates a higher scheduling priority of the remaining data packets in the corresponding data packet set.

Optionally, the performing an operation based on the second access network delay budget or the second delay budget includes at least one of the following items:
item 1: determining at least one of the following for a target data packet based on a second delay budget or a second access network delay budget of the target data packet: a scheduling priority, a scheduling weight, a sending priority, and a sending weight;
item 2: configuring a link layer function based on the second delay budget or the second access network delay budget of the target data packet;
item 3: determining at least one of the following for the target data packet based on a remaining duration of the second delay budget of the target data packet or a remaining duration of the second access network delay budget: a scheduling priority, a scheduling weight, a sending priority, and a sending weight; and
item 4: starting counting for the second delay budget or the second access network delay budget from a time at which the target data packet is received or a time at which the target data packet arrives at the first communication device;
where
the target data packet is a data packet in the data packet set.

It should be noted that item 1 may specifically include content of item 3.

In an optional embodiment of this application, each data packet in a data set (or a data packet set) is regarded as an independent individual, and a scheduling priority of each data packet is determined based on a remaining duration of the second delay budget of each data packet or a remaining duration of the second access network delay budget. A shorter remaining duration of the second delay budget of the data packet or a shorter remaining duration of the second access network delay budget indicates a higher scheduling priority of the corresponding data packet.

Optionally, the obtaining, by the first communication device, the first delay budget includes at least one of the following:
obtaining, by the first communication device, the first delay budget from header information of a data packet of the data packet set;
obtaining, by the first communication device, the first delay budget from control plane signaling; and
receiving, by the first communication device, a first delay budget sent by a terminal.

In an implementation, the first delay budget sent by the terminal and received by the first communication device is a first delay budget in the uplink direction.

Optionally, the sending the first access network delay budget includes sending the first access network delay budget to a first target device, and the first target device includes a terminal or a second communication device.

According to this embodiment of this application, the first communication device obtains at least one of the first delay budget (such as a PSDB) and the second core network delay information. The first access network delay budget (the access network delay budget of the data packet set) may be determined based on at least one of the first delay budget and the second core network delay information, so as to perform an operation on the data packet in the data packet set correspondingly based on the first access network delay budget, thereby ensuring performance of the first delay budget of the data packet set.

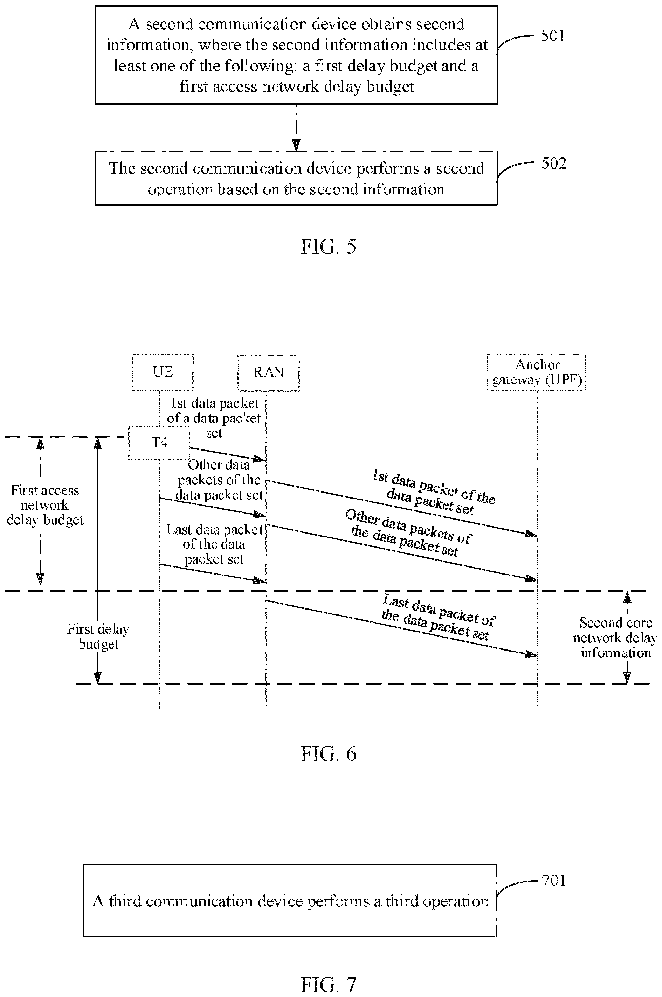

Referring to FIG. 5, an embodiment of this application provides an information processing method, applied to a second communication device. The second communication device includes but is not limited to a terminal, and the method includes the following steps.

Step 501: The second communication device obtains second information, where the second information includes at least one of the following: a first delay budget and a first access network delay budget.

Step 502: The second communication device performs a second operation based on the second information, where the second operation includes at least one of the following:
determining a second access network delay budget of a data packet in a data packet set;
performing an operation based on the first access network delay budget or the first delay budget; and
performing an operation based on the second access network delay budget or a second delay budget.

In an implementation, the performing an operation based on the first access network delay budget or the first delay budget includes: performing an operation on a data packet in the data packet set or the data packet set based on the first access network delay budget or the first delay budget.

In an implementation, the performing an operation based on the second access network delay budget or the second delay budget includes: performing an operation on a data packet in the data packet set based on the second access network delay budget or the second delay budget.

Optionally, the first delay budget (such as a PSDB) or the delay budget of the data packet set is used to indicate a delay budget for transmission of one data packet set between a terminal and an anchor gateway.

The first access network delay budget (such as an AN PSDB) or the access network delay budget of the data packet set is used to indicate one of the following: a delay budget for transmission of one data packet set between the terminal and a RAN network element, and a value obtained by subtracting the second core network delay information from the first delay budget;
the second delay budget (such as a PDB) or the delay budget of the data packet is used to indicate a delay budget for transmission of one data packet between the terminal and the anchor gateway;
the second access network delay budget (such as an AN PDB) or the access network delay budget of the data packet is used to indicate one of the following: a delay budget for transmission of one data packet between the terminal and the RAN network element, and a value obtained by subtracting the second core network delay information from the second delay budget;
the second core network delay budget or the core network delay budget of the data packet is used to indicate a delay budget (such as a CN PDB) for transmission of one data packet between the RAN network element and the anchor gateway; and
the second core network delay or the core network delay of the data packet is used to indicate a time required for transmission of one data packet between the RAN network element and the anchor gateway.

In an implementation, the second communication device obtains the second information from a second source device, and the second source device includes at least one of the following: the first communication device, an AMF, an SMF, a PCF, and an AF.

Optionally, referring to FIG. 6, the determining the second access network delay budget of the data packet in the data packet set includes at least one of the following:
determining a second access network delay budget of a second target data packet based on a value obtained by subtracting a third duration value from the first access network delay budget;
determining a second access network delay budget of the 1st data packet of a second data packet set based on a first access network delay; and
determining the second access network delay budget of the second target data packet based on the first access network delay;
where
the second target data packet is a data packet in the second data packet set; and
the third duration value is determined based on a value obtained by subtracting T4 from T5;

T4 is one of the following:
a receiving time at which the second communication device receives the 1st data packet of the second data packet set;
a time at which the 1st data packet of the second data packet set arrives at the second communication device; and
a time at which the 1st data packet in the second data packet set starts to wait for scheduling on a terminal; and

T5 is one of the following:
a receiving time at which the second communication device receives the second target data packet;
a time at which the second target data packet arrives at the second communication device; and
a time at which the second target data packet starts to wait for scheduling on the terminal.

Optionally, the second data packet set is any one data packet set or any one data packet set instance.

In an implementation, the second data packet set is a data packet set in the uplink direction.

In an implementation, the receiving time at which the second communication device receives the second target data packet includes a receiving time at which a NAS or AS of the second communication device receives the second target data packet.

The time at which the second target data packet arrives at the second communication device includes a time at which the second target data packet arrives at the NAS or AS of the second communication device.

In an implementation, the third duration value is one of the following: a value obtained by subtracting T4 from T5, and a value obtained by subtracting T4 from T5 plus one hysteresis or extended range value.

In an implementation, the second access network delay budget of the 1st data packet of the second data packet set is the first access network delay.

In another implementation, because all data packets of the second data set arrive at the second communication device together, T5 is the same as T4. In this case, the second access network delay budget of any one data packet of the second data set is the first access network delay budget.

In an implementation, the second access network delay budget of the second target data packet is one of the following: a value obtained by subtracting the third duration value from the first access network delay budget, and a value obtained by subtracting the third duration value from the first access network delay budget plus one hysteresis or extended range value.

In an implementation, the second target data packet is one of the following:
the last data packet in the second data packet set;
any one data packet in the second data packet set other than the 1st data packet; and
any one data packet in the second data packet set.

Optionally, the performing an operation based on the first access network delay budget or the first delay budget includes at least one of the following items:
item 1: based on a first delay budget or a first access network delay budget of the data packet set, determining at least one of the following for a data packet in the data packet set or the data packet set: a scheduling priority, a scheduling weight, a sending priority, and a sending weight;
item 2: based on a remaining duration of the first delay budget of the data packet set or a remaining duration of the first access network delay budget, determining at least one of the following for a data packet in the data packet set or the data packet set: a scheduling priority, a scheduling weight, a sending priority, and a sending weight;
item 3: configuring a link layer function based on the first delay budget or the first access network delay budget of the data packet set; and
item 4: starting counting for the first delay budget or the first access network delay budget from a time at which the first data packet of a data set or a target data packet arrives at a first communication device.

It should be noted that item 1 may specifically include content of item 2.

In an optional embodiment of this application, the performing an operation based on the first access network delay budget or the first delay budget may be understood as:
regarding a data set as a whole, and based on a first access network delay budget or a first delay budget (such as a remaining duration) of the data set, determining at least one of the following for a data packet (such as remaining data packets) in the data set or the data packet set: a scheduling priority, a scheduling weight, a sending priority, and a sending weight.

Optionally, the performing an operation based on the second access network delay budget or the second delay budget includes at least one of the following:
determining at least one of the following for a target data packet based on a second delay budget or a second access network delay budget of the target data packet: a scheduling priority, a scheduling weight, a sending priority, and a sending weight;
configuring a link layer function based on the second delay budget or the second access network delay budget of the target data packet;
determining at least one of the following for the target data packet based on a remaining duration of the second delay budget of the target data packet or a remaining duration of the second access network delay budget: a scheduling priority, a scheduling weight, a sending priority, and a sending weight; and
starting counting for the second delay budget or the second access network delay budget from a time at which the target data packet is received or a time at which the target data packet arrives at a first communication device;
where
the target data packet is a data packet in the data packet set.

In an optional embodiment of this application, the performing an operation based on the second access network delay budget or the second delay budget may be understood as:
regarding each data packet in the data set as an independent individual, and determining at least one of the following for the data packet based on the second access network delay budget or the second delay budget (such as a remaining duration): a scheduling priority, a scheduling weight, a sending priority, and a sending weight.

Optionally, the obtaining, by the second communication device, the first access network delay budget includes at least one of the following:
obtaining, by the second communication device, the first access network delay budget from a first communication device or a core network device;
obtaining, by the second communication device, a first delay budget from the core network device, obtaining second core network delay information from the first communication device, and obtaining the first access network delay budget based on the second core network delay information and the first delay budget; and
obtaining, by the second communication device, the second core network delay information from the first communication device, and determining the first access network delay budget based on the second core network delay information and a first delay budget determined by the second communication device itself.

Optionally, the performing an operation based on the first access network delay budget or the first delay budget further includes:
performing an operation on the data packet of the data packet set or the data packet set based on a logical channel priority and the first access network delay budget or the first delay budget;
and/or
the performing an operation based on the second access network delay budget or the second delay budget includes:
   performing an operation on the data packet of the data packet set based on a logical channel priority and the second access network delay budget or the second delay budget.

In an implementation, the performing an operation on the data packet of the data packet set or the data packet set includes determining at least one of the following for the data packet of the data packet set or the data packet set: a scheduling priority, a scheduling weight, a sending priority, and a sending weight.

In an implementation, the performing an operation on the data packet of the data packet set includes determining at least one of the following for a target data packet: a scheduling priority, a scheduling weight, a sending priority, and a sending weight.

In this embodiment of this application, the second communication device obtains the first access network delay budget and/or the first delay budget, and can perform a second operation based on the first access network delay budget based on the first access network delay budget and/or the first delay budget, so as to ensure performance of the first delay budget of the data packet set.

Referring to FIG. 7, an embodiment of this application provides an information processing method, applied to a third communication device. The third communication device includes but is not limited to one of the following: a UPF. The method includes the following step.

Step 701: The third communication device performs a third operation, where the third operation includes at least one of the following:
adding T1 to a header of a data packet of a downlink data packet set; where T1 is one of the following:
a sending time at which an anchor gateway sends the 1st data packet of a data packet set to a second target end;
a receiving time at which the anchor gateway receives the 1st data packet of the data packet set from an N6 interface;
a time at which the 1st data packet of the data packet set arrives at the anchor gateway;
a sending time at which the anchor gateway sends the 1st data packet of the downlink data packet set;
a receiving time at which the anchor gateway receives the 1st data packet of the downlink data packet set;
a sending time at which the anchor gateway sends a data packet to the second target end;
a receiving time at which the anchor gateway receives the data packet from the N6 interface;
a sending time at which the anchor gateway sends a downlink data packet; and
a receiving time at which the anchor gateway receives the downlink data packet;
where
the second target end includes one of the following: a RAN, an N3 interface, and an N9 interface.

In an implementation, a data packet in the adding T1 to a header of a data packet of a downlink data packet set may be the 1st data packet in the data set or any one data packet in the data set.

In this embodiment of this application, the third communication device adds T1 to the header of the data packet of the downlink data packet set, so that the second target end (such as a first communication device) can determine the first access network delay budget based on T1, and then can schedule the data packet of the data packet set based on the first access network delay budget, thereby ensuring performance of the first delay budget of the data packet set.

The following describes the information processing method in the embodiments of this application with reference to specific application scenarios.

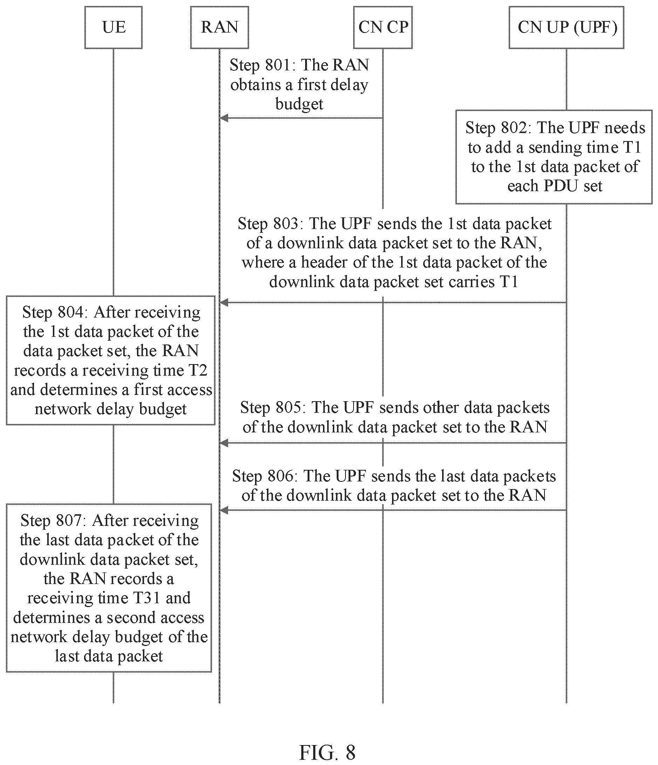

Application scenario 1 in the embodiments of this application mainly describes an interaction process between communication devices in a transmission process of a downlink PS. Referring to FIG. 8, the following steps are included:

Application scenario 1 in the embodiments of this application mainly describes an interaction process between communication devices in a transmission process of a downlink data packet set. Referring to FIG. 8, the following steps are included:

Step 801: A RAN obtains a first delay budget.

Optionally, the RAN obtains the first delay budget from a protocol data unit set quality of service profile (PDU Set QoS Profile) sent by a core network control plane (CN CP), where the PDU set QoS profile carries a PS 5G QoS identifier (5G QoS Identifier, 5QI) and the first delay budget.

Step 802: Optionally, a UPF needs to add a sending time T1 to the 1st data packet of each data packet set (PDU Set).

Step 803: The UPF sends the 1st data packet of a downlink data packet set to the RAN, where a header of the 1st data packet of the downlink data packet set carries T1.

Optionally, T1 is carried in a GPRS tunneling protocol for the user plane header (GPRS Tunnelling Protocol for the User Plane header, GTP-U header) of the 1st data packet of the data packet set.

Step 804: Optionally, after receiving the 1st data packet of the data packet set, the RAN records a receiving time T2 and determines a first access network delay budget.

Optionally, the first access network delay budget = the first delay budget - the value corresponding to second core network delay information.

In an implementation, the second core network delay information is a common empirical value, which is applicable to all data packet sets. In another implementation, the second core network delay information = T2-T1, where T2-T1 is second core network delay information of the 1st data packet of each data packet set.

Step 805: The UPF sends other data packets of the downlink data packet set to the RAN.

Step 806: The UPF sends the last data packets of the downlink data packet set to the RAN.

Step 807: Optionally, after receiving the last data packet of the downlink data packet set, the RAN records a receiving time T31 and determines a second access network delay budget of the last data packet.

Optionally, the second access network delay budget of the last data packet = the first access network delay budget minus (T31-T2). T31 is a time at which the last data packet arrives at the RAN.

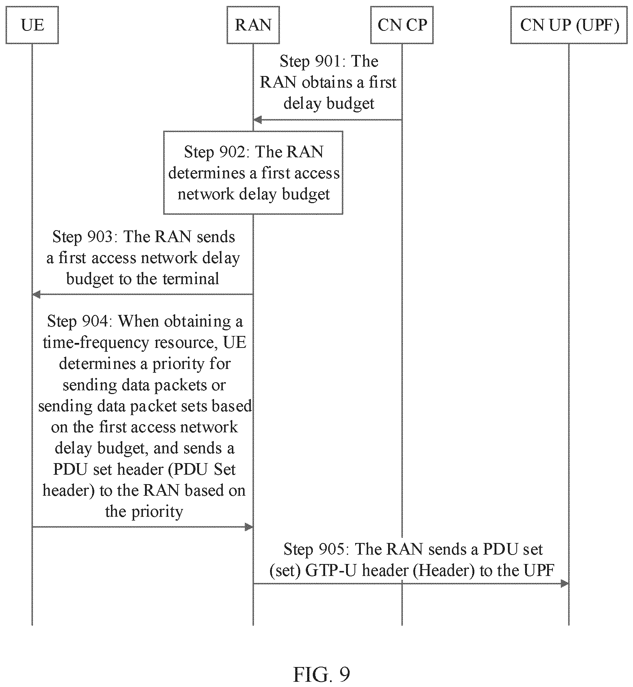

Application scenario 2 in the embodiments of this application:
Application scenario 2 in the embodiments of this application mainly describes a process of data transmission performed by the UE based on a first access network delay budget. Referring to FIG. 9, the following steps are included:
Step 901: The RAN obtains a first delay budget.

Optionally, the RAN obtains a PSDB from a protocol data unit set quality of service profile (PDU Set QoS Profile) sent by a core network control plane (CN CP), where the PDU set QoS profile carries a PS 5G QoS identifier (5G QoS Identifier, 5QI) and the first delay budget.

Step 902: The RAN determines a first access network delay budget.

For a specific determining manner, reference may be made to the embodiment of FIG. 8.

Step 903: The RAN sends a first access network delay budget to a terminal.

Step 904: When obtaining a time-frequency resource, UE determines a priority for sending data packets or sending data packet sets based on the first access network delay budget, and sends a PDU set header (PDU Set header) to the RAN based on the priority.

Step 905: The RAN sends a PDU set GTP-U header (PDU Set GTP-U header) to the UPF.

For the information processing method provided in the embodiments of this application, the execution subject may be an information processing apparatus. In the embodiments of this application, the information processing method being performed by the information processing apparatus is used as an example to describe the information processing apparatus provided in the embodiments of this application.

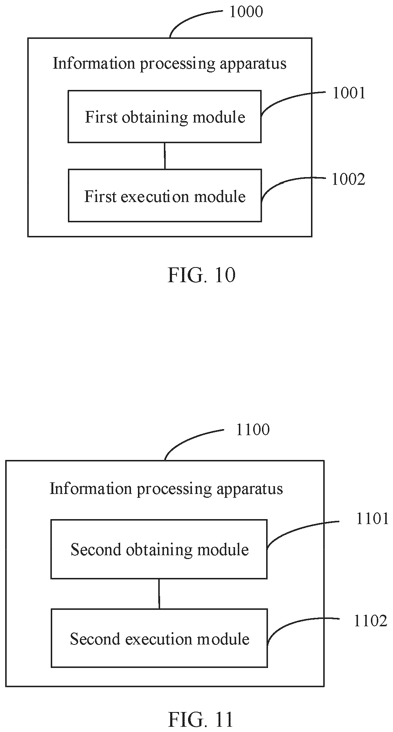

Referring to FIG. 10, FIG. 10 is a schematic structural diagram of an information processing apparatus according to an embodiment of this application. The apparatus is applied to a first communication device. As shown in FIG. 10, the information processing apparatus 1000 includes:
a first obtaining module 1001, configured to obtain first information, where the first information includes at least one of the following: a first delay budget and second core network delay information; and
a first execution module 1002, configured to perform a first operation based on the first information, where the first operation includes at least one of the following:
   determining the second core network delay information;
   determining a first access network delay budget;
   performing an operation based on the first access network delay budget or the first delay budget;
   sending the first access network delay budget;
   determining a second access network delay budget of data packets in a data packet set; and
   performing an operation based on the second access network delay budget or a second delay budget; where
   the second core network delay information includes one of the following: the second core network delay budget (such as a CN PDU Delay Budget) and the second core network delay.

Optionally, the first delay budget is a delay budget of a data packet set;
the first access network delay budget is an access network delay budget of the data packet set;
the second delay budget is a delay budget of a data packet;
the second access network delay budget is an access network delay budget of the data packet;
the second core network delay budget is a core network delay budget of a data packet; and
the second core network delay is a core network delay of one of the following data packets.

Optionally, the first delay budget (such as a PSDB) or the delay budget of the data packet set is used to indicate a delay budget for transmission of one data packet set between a terminal and an anchor gateway.

The first access network delay budget (such as an AN PSDB) or the access network delay budget of the data packet set is used to indicate one of the following: a delay budget for transmission of one data packet set between the terminal and a RAN network element, and a value obtained by subtracting the second core network delay information from the first delay budget;
the second delay budget (such as a PDB) or the delay budget of the data packet is used to indicate a delay budget for transmission of one data packet between the terminal and the anchor gateway;
the second access network delay budget (such as an AN PDB) or the access network delay budget of the data packet is used to indicate one of the following: a delay budget for transmission of one data packet between the terminal and the RAN network element, and a value obtained by subtracting the second core network delay information from the second delay budget;
the second core network delay budget or the core network delay budget of the data packet is used to indicate a delay budget (such as a CN PDB) for transmission of one data packet between the RAN network element and the anchor gateway; and
the second core network delay or the core network delay of the data packet is used to indicate a time required for transmission of one data packet between the RAN network element and the anchor gateway.

Optionally, the second core network delay information is one of the following:
second core network delay information of the 1st data packet of a data packet set;
second core network delay information of the last data packet of the data packet set; and
second core network delay information of any data packet in a tunnel or data flow.

Optionally, the first execution module 1002 is configured to determine the first access network delay budget based on a value obtained by subtracting the second core network delay information from the first delay budget.

Optionally, in the apparatus in this embodiment of this application, the first execution module 1002 is configured to perform one of the following:
determining the second core network delay information based on a value obtained by subtracting T1 from T2;
determining the second core network delay information based on an average or maximum value of second core network delays obtained through measurement; and
determining the second core network delay information based on pre-configured second core network delay information.

T1 is one of the following:
a sending time at which an anchor gateway sends the 1st data packet of a data packet set to a second target end;
a receiving time at which the anchor gateway receives the 1st data packet of the data packet set from an N6 interface;
a time at which the 1st data packet of the data packet set arrives at the anchor gateway;
a sending time at which the anchor gateway sends the 1st data packet of a downlink data packet set;
a receiving time at which the anchor gateway receives the 1st data packet of the downlink data packet set;
a sending time at which the anchor gateway sends a data packet to the second target end;
a receiving time at which the anchor gateway receives the data packet from the N6 interface;
a sending time at which the anchor gateway sends a downlink data packet; and
a receiving time at which the anchor gateway receives the downlink data packet.

T2 is one of the following:
a receiving time at which the RAN network element receives the 1st data packet of a data packet set from a first source end;
a receiving time at which the RAN network element receives the 1st data packet of a downlink data packet set;
a receiving time at which the RAN network element receives a data packet from the first source end; and
a receiving time at which the RAN network element receives a downlink data packet;
where
the second target end includes one of the following: a RAN, an N3 interface, and an N9 interface; and
the first source end includes one of the following: an N3 interface and a gateway (such as a UPF).

Optionally, the apparatus in this embodiment of this application further includes:
a third obtaining module, configured to obtain T1 based on a data packet in the downlink data packet set;
where
the data packet in the data packet set carries T1; and
the data packet in the data packet set is one of the following: the 1st data packet of the data packet set, and any one or more data packets of the data packet set.

Optionally, the first execution module 1002 is configured to perform at least one of the following:
determining a second access network delay budget of a first target data packet based on a value obtained by subtracting a first duration value from the first delay budget;
determining the second access network delay budget of the first target data packet based on a value obtained by subtracting a second duration value and the second core network delay information from the first delay budget;
determining the second access network delay budget of the first target data packet based on a value obtained by subtracting the second duration value from the first access network delay budget;
determining a second access network delay budget of the 1st data packet of a first data packet set based on a first access network delay; and
determining a second access network delay of the first target data packet based on the first access network delay;
where
the first target data packet is a data packet in the first data set;
the first duration value is determined based on a value obtained by subtracting T11 from T31; and
the second duration value is determined based on a value obtained by subtracting T21 from T31.

T11 is one of the following:
a sending time at which an anchor gateway sends the 1st data packet of the first data packet set;
a receiving time at which the anchor gateway receives the 1st data packet of the first data packet set; and
a time at which the 1st data packet of the first data packet set arrives at the anchor gateway.

T21 is one of the following:
a receiving time at which the first communication device receives the 1st data packet of the first data packet set; and
a time at which the 1st data packet of the first data packet set arrives at the first communication device.

T31 is one of the following:
a receiving time at which the first communication device receives the first target data packet; and
a time at which the first target data packet arrives at the first communication device.

Optionally, the first execution module 1002 is configured to perform at least one of the following:
based on a first delay budget or a first access network delay budget of the data packet set, determining at least one of the following for a data packet in the data packet set or the data packet set: a scheduling priority, a scheduling weight, a sending priority, and a sending weight;
based on a remaining duration of the first delay budget of the data packet set or a remaining duration of the first access network delay budget, determining at least one of the following for a data packet in the data packet set or the data packet set: a scheduling priority, a scheduling weight, a sending priority, and a sending weight;
configuring a link layer function based on the first delay budget or the first access network delay budget of the data packet set; and
starting counting for the first delay budget or the first access network delay budget from a time at which the 1st data packet of a data set or a target data packet arrives at the first communication device.

Optionally, the first execution module 1002 is configured to perform at least one of the following:
determining at least one of the following for a target data packet based on a second delay budget or a second access network delay budget of the target data packet: a scheduling priority, a scheduling weight, a sending priority, and a sending weight;
configuring a link layer function based on the second delay budget or the second access network delay budget of the target data packet;
determining at least one of the following for the target data packet based on a remaining duration of the second delay budget of the target data packet or a remaining duration of the second access network delay budget: a scheduling priority, a scheduling weight, a sending priority, and a sending weight; and
starting counting for the second delay budget or the second access network delay budget from a time at which the target data packet is received or a time at which the target data packet arrives at the first communication device;
where
the target data packet is a data packet in the data packet set.

Optionally, the first obtaining module 1001 is configured to perform at least one of the following:
obtaining, by the first communication device, the first delay budget from header information of a data packet of the data packet set;
obtaining, by the first communication device, the first delay budget from control plane signaling; and
receiving, by the first communication device, a first delay budget sent by a terminal.

Optionally, the first execution module 1002 is configured to send the first access network delay budget to a first target device, and the first target device includes a terminal or a second communication device.

According to this embodiment of this application, the first communication device obtains at least one of the first delay budget (such as a PSDB) and the second core network delay information. The first access network delay budget (the access network delay budget of the data packet set) may be determined based on at least one of the first delay budget and the second core network delay information, so as to perform an operation on the data packet in the data packet set correspondingly based on the first access network delay budget, thereby ensuring performance of the first delay budget of the data packet set.

The information processing apparatus 1000 provided in this embodiment of this application is capable of implementing the processes implemented in the method embodiments in FIG. 2, with the same technical effects achieved. To avoid repetition, details are not described herein again.

Referring to FIG. 11, FIG. 11 is a schematic structural diagram of an information processing apparatus according to an embodiment of this application. The apparatus is applied to a second communication device. As shown in FIG. 11, the information processing apparatus 1100 includes:
a second obtaining module 1101, configured to obtain second information, where the second information includes at least one of the following: a first delay budget and a first access network delay budget; and
a second execution module 1102, configured to perform a second operation based on the second information, where the second operation includes at least one of the following:
   determining a second access network delay budget of a data packet in a data packet set;
   performing an operation based on the first access network delay budget or the first delay budget; and
   performing an operation based on the second access network delay budget or a second delay budget.

Optionally, the second execution module 1102 is configured to perform at least one of the following:
determining a second access network delay budget of a second target data packet based on a value obtained by subtracting a third duration value from the first access network delay budget;
determining a second access network delay budget of the 1st data packet of a second data packet set based on a first access network delay; and
determining the second access network delay budget of the second target data packet based on the first access network delay;
where
the second target data packet is a data packet in the second data packet set; and
the third duration value is determined based on a value obtained by subtracting T4 from T5;

T4 is one of the following:
a receiving time at which the second communication device receives the 1st data packet of the second data packet set;
a time at which the 1st data packet of the second data packet set arrives at the second communication device; and
a time at which the 1st data packet in the second data packet set starts to wait for scheduling on a terminal; and

T5 is one of the following:
a receiving time at which the second communication device receives the second target data packet;
a time at which the second target data packet arrives at the second communication device; and
a time at which the second target data packet starts to wait for scheduling on the terminal.

Optionally, the second execution module 1102 is configured to perform at least one of the following:
based on a first delay budget or a first access network delay budget of the data packet set, determining at least one of the following for a data packet in the data packet set or the data packet set: a scheduling priority, a scheduling weight, a sending priority, and a sending weight;
based on a remaining duration of the first delay budget of the data packet set or a remaining duration of the first access network delay budget, determining at least one of the following for a data packet in the data packet set or the data packet set: a scheduling priority, a scheduling weight, a sending priority, and a sending weight;
configuring a link layer function based on the first delay budget or the first access network delay budget of the data packet set; and
starting counting for the first delay budget or the first access network delay budget from a time at which the first data packet of a data set or a target data packet arrives at a first communication device.

Optionally, the second execution module 1102 is configured to perform at least one of the following:
determining at least one of the following for a target data packet based on a second delay budget or a second access network delay budget of the target data packet: a scheduling priority, a scheduling weight, a sending priority, and a sending weight;
configuring a link layer function based on the second delay budget or the second access network delay budget of the target data packet;
determining at least one of the following for the target data packet based on a remaining duration of the second delay budget of the target data packet or a remaining duration of the second access network delay budget: a scheduling priority, a scheduling weight, a sending priority, and a sending weight; and
starting counting for the second delay budget or the second access network delay budget from a time at which the target data packet is received or a time at which the target data packet arrives at a first communication device;
where
the target data packet is a data packet in the data packet set.

Optionally, the second obtaining module 1101 is configured to perform at least one of the following:
obtaining the first access network delay budget from a first communication device or a core network device;
obtaining a first delay budget from the core network device, obtaining second core network delay information from the first communication device, and obtaining the first access network delay budget based on the second core network delay information and the first delay budget; and
obtaining the second core network delay information from the first communication device, and determining the first access network delay budget based on the second core network delay information and a first delay budget determined by the second communication device itself.

Optionally, the second execution module 1102 is further configured to perform an operation on the data packet of the data packet set or the data packet set based on a logical channel priority and the first access network delay budget or the first delay budget; and/or
perform an operation on the data packet of the data packet set based on a logical channel priority and the second access network delay budget or the second delay budget.

In this embodiment of this application, the second communication device obtains the first access network delay budget and/or the first delay budget, and can perform a second operation based on the first access network delay budget based on the first access network delay budget and/or the first delay budget, so as to ensure performance of the first delay budget of the data packet set.

The information processing apparatus 1100 provided in this embodiment of this application is capable of implementing the processes implemented in the method embodiments in FIG. 5, with the same technical effects achieved. To avoid repetition, details are not described herein again.

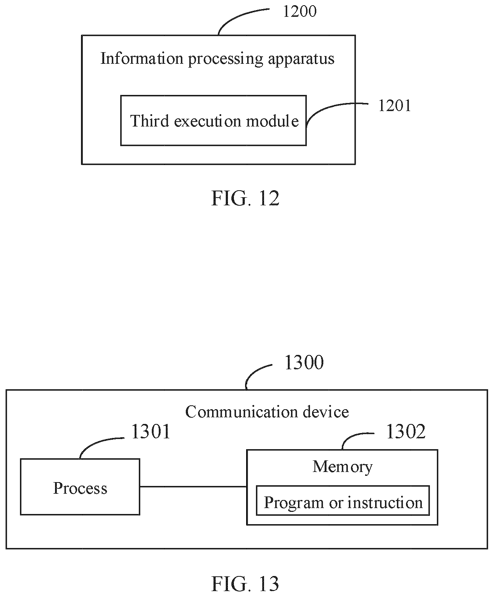

Referring to FIG. 12, FIG. 12 is a schematic structural diagram of an information processing apparatus according to an embodiment of this application. The apparatus is applied to a third communication device. As shown in FIG. 12, the information processing apparatus 1200 includes:
a third execution module 1201, configured to perform a third operation, where the third operation includes at least one of the following:
   adding T1 to a header of a data packet of a downlink data packet set; where
   T1 is one of the following:
      a sending time at which an anchor gateway sends the 1st data packet of a data packet set to a second target end;
      a receiving time at which the anchor gateway receives the 1st data packet of the data packet set from an N6 interface;
      a time at which the 1st data packet of the data packet set arrives at the anchor gateway;
      a sending time at which the anchor gateway sends the 1st data packet of the downlink data packet set;
      a receiving time at which the anchor gateway receives the 1st data packet of the downlink data packet set;
      a sending time at which the anchor gateway sends a data packet to the second target end;
      a receiving time at which the anchor gateway receives the data packet from the N6 interface;
      a sending time at which the anchor gateway sends a downlink data packet; and
      a receiving time at which the anchor gateway receives the downlink data packet;
      where
      the second target end includes one of the following: a RAN, an N3 interface, and an N9 interface.

In this embodiment of this application, the third communication device adds T1 to a header of the 1st data packet of the downlink data packet set, so that the second target end (such as a first communication device) can determine the first access network delay budget based on T1, and then can schedule the data packet of the data packet set based on the first access network delay budget, thereby ensuring performance of the first delay budget of the data packet set.

The information processing apparatus 1200 provided in this embodiment of this application is capable of implementing the processes implemented in the method embodiments in FIG. 7, with the same technical effects achieved. To avoid repetition, details are not described herein again.

Optionally, as shown in FIG. 13, an embodiment of this application further provides a communication device 1300, including a processor 1301, a memory 1302, and a program or instructions stored in the memory 1302 and capable of running on the processor 1301. For example, when the communication device 1300 is a first communication device and when the program or the instructions are executed by the processor 1301, the steps of the foregoing embodiments of the information processing method on the side of the first communication device are implemented, with the same technical effects achieved. When the communication device 1300 is a second communication device and when the program or the instructions are executed by the processor 1301, the steps of the foregoing embodiments of the information processing method on the side of the second communication device are implemented, with the same technical effects achieved. When the communication device 1300 is a third communication device and when the program or the instructions are executed by the processor 1301, the steps of the foregoing embodiments of the information processing method on the side of the third communication device are implemented, with the same technical effects achieved. To avoid repetition, details are not described herein again.

An embodiment of this application further provides a communication device, including a processor and a communication interface, where the processor is configured to implement the steps of the method described above.

An embodiment of this application further provides a communication system, including a first communication device, a second communication device, and a third communication device, where the first communication device may be configured to execute the steps of the information processing method on the first communication device side, the second communication device may be configured to execute the steps of the information processing method on the second communication device side, and the third communication device may be configured to execute the steps of the information processing method on the third communication device side.

An embodiment of this application further provides a readable storage medium, where a program or an instruction is stored in the readable storage medium. When the program or the instruction is executed by a processor, the processes of the foregoing embodiment of the information processing method can be implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or an instruction to implement the processes of the foregoing embodiment of the information processing method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing information processing method embodiments, with the same technical effects achieved. To avoid repetition, details are not repeated herein.

It should be noted that in this specification, the term "include", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. An information processing method, comprising:
obtaining, by a first communication device, first information, wherein the first information comprises at least one of the following: a first delay budget and second core network delay information; and
performing, by the first communication device, a first operation based on the first information, wherein the first operation comprises at least one of the following:
determining the second core network delay information;
determining a first access network delay budget;
performing an operation based on the first access network delay budget or the first delay budget;
sending the first access network delay budget;
determining a second access network delay budget of data packets in a data packet set; and
performing an operation based on the second access network delay budget or a second delay budget; wherein
the second core network delay information comprises one of the following: the second core network delay budget and a second core network delay.

2. The method according to claim 1, wherein
the first delay budget is a delay budget of a data packet set;
the first access network delay budget is an access network delay budget of the data packet set;
the second delay budget is a delay budget of a data packet;
the second access network delay budget is an access network delay budget of the data packet;
the second core network delay budget is a core network delay budget of a data packet; and
the second core network delay is a core network delay of one of the following data packets.

3. The method according to claim 2, wherein
the first delay budget or the delay budget of the data packet set is used to indicate a delay budget for transmission of one data packet set between a terminal and an anchor gateway;
the first access network delay budget or the access network delay budget of the data packet set is used to indicate one of the following: a delay budget for transmission of one data packet set between the terminal and a RAN network element, and a value obtained by subtracting the second core network delay information from the first delay budget;
the second delay budget or the delay budget of the data packet is used to indicate a delay budget for transmission of one data packet between the terminal and the anchor gateway;
the second access network delay budget or the access network delay budget of the data packet is used to indicate one of the following: a delay budget for transmission of one data packet between the terminal and the RAN network element, and a value obtained by subtracting the second core network delay information from the second delay budget;
the second core network delay budget or the core network delay budget of the data packet is used to indicate a delay budget for transmission of one data packet between the RAN network element and the anchor gateway; and
the second core network delay or the core network delay of the data packet is used to indicate a time required for transmission of one data packet between the RAN network element and the anchor gateway.

4. The method according to claim 1, wherein the second core network delay information is one of the following:
second core network delay information of the 1st data packet of a data packet set;
second core network delay information of the last data packet of the data packet set; and
second core network delay information of any data packet in a tunnel or data flow.

5. The method according to claim 1, wherein the determining a first access network delay budget based on the first information comprises:
determining the first access network delay budget based on a value obtained by subtracting the second core network delay information from the first delay budget.

6. The method according to claim 1 or 5, wherein the determining the second core network delay information comprises one of the following:
determining the second core network delay information based on a value obtained by subtracting T1 from T2;
determining the second core network delay information based on an average or maximum value of second core network delays obtained through measurement; and
determining the second core network delay information based on pre-configured second core network delay information; wherein
**T1** is one of the following:
a sending time at which an anchor gateway sends the 1st data packet of a data packet set to a second target end;
a receiving time at which the anchor gateway receives the 1st data packet of the data packet set from an N6 interface;
a time at which the 1st data packet of the data packet set arrives at the anchor gateway;
a sending time at which the anchor gateway sends the 1st data packet of a downlink data packet set;
a receiving time at which the anchor gateway receives the 1st data packet of the downlink data packet set;
a sending time at which the anchor gateway sends a data packet to the second target end;
a receiving time at which the anchor gateway receives the data packet from the N6 interface;
a sending time at which the anchor gateway sends a downlink data packet; and
a receiving time at which the anchor gateway receives the downlink data packet; wherein
T2 is one of the following:
a receiving time at which the RAN network element receives the 1st data packet of a data packet set from a first source end;
a receiving time at which the RAN network element receives the 1st data packet of a downlink data packet set;
a receiving time at which the RAN network element receives a data packet from the first source end; and
a receiving time at which the RAN network element receives a downlink data packet;
wherein
the second target end comprises one of the following: a RAN, an N3 interface, and an N9 interface; and
the first source end comprises one of the following: an N3 interface and a gateway.

7. The method according to claim 6, further comprising:
obtaining T1 based on a data packet in the downlink data packet set;
wherein
the data packet in the data packet set carries T1; and
the data packet in the data packet set is one of the following: the 1st data packet of the data packet set, and any one or more data packets of the data packet set.

8. The method according to claim 1, wherein the determining a second access network delay budget of a data packet in a data packet set comprises at least one of the following:
determining a second access network delay budget of a first target data packet based on a value obtained by subtracting a first duration value from the first delay budget;
determining the second access network delay budget of the first target data packet based on a value obtained by subtracting a second duration value and the second core network delay information from the first delay budget;
determining the second access network delay budget of the first target data packet based on a value obtained by subtracting the second duration value from the first access network delay budget;
determining a second access network delay budget of the 1st data packet of a first data packet set based on a first access network delay; and
determining a second access network delay of the first target data packet based on the first access network delay;
wherein
the first target data packet is a data packet in the first data set;
the first duration value is determined based on a value obtained by subtracting T11 from T31; and
the second duration value is determined based on a value obtained by subtracting T21 from T31;
T11 is one of the following:
a sending time at which an anchor gateway sends the 1st data packet of the first data packet set;
a receiving time at which the anchor gateway receives the 1st data packet of the first data packet set; and
a time at which the 1st data packet of the first data packet set arrives at the anchor gateway;
T21 is one of the following:
a receiving time at which the first communication device receives the 1st data packet of the first data packet set; and
a time at which the 1st data packet of the first data packet set arrives at the first communication device; and
T31 is one of the following:
a receiving time at which the first communication device receives the first target data packet; and
a time at which the first target data packet arrives at the first communication device.

9. The method according to claim 1, wherein the performing an operation based on the first access network delay budget or the first delay budget comprises at least one of the following:
based on a first delay budget or a first access network delay budget of the data packet set, determining at least one of the following for a data packet in the data packet set or the data packet set: a scheduling priority, a scheduling weight, a sending priority, and a sending weight;
based on a remaining duration of the first delay budget of the data packet set or a remaining duration of the first access network delay budget, determining at least one of the following for a data packet in the data packet set or the data packet set: a scheduling priority, a scheduling weight, a sending priority, and a sending weight;
configuring a link layer function based on the first delay budget or the first access network delay budget of the data packet set; and
starting counting for the first delay budget or the first access network delay budget from a time at which the 1st data packet of a data set or a target data packet arrives at the first communication device.

10. The method according to claim 1, wherein the performing an operation based on the second access network delay budget or the second delay budget comprises at least one of the following:
determining at least one of the following for a target data packet based on a second delay budget or a second access network delay budget of the target data packet: a scheduling priority, a scheduling weight, a sending priority, and a sending weight;
configuring a link layer function based on the second delay budget or the second access network delay budget of the target data packet;
determining at least one of the following for the target data packet based on a remaining duration of the second delay budget of the target data packet or a remaining duration of the second access network delay budget: a scheduling priority, a scheduling weight, a sending priority, and a sending weight; and
starting counting for the second delay budget or the second access network delay budget from a time at which the target data packet is received or a time at which the target data packet arrives at the first communication device;
wherein
the target data packet is a data packet in the data packet set.

11. The method according to claim 1, wherein the obtaining, by the first communication device, the first delay budget comprises at least one of the following:
obtaining, by the first communication device, the first delay budget from header information of a data packet of the data packet set;
obtaining, by the first communication device, the first delay budget from control plane signaling; and
receiving, by the first communication device, a first delay budget sent by a terminal.

12. The method according to claim 1, wherein the sending the first access network delay budget comprises sending the first access network delay budget to a first target device, and the first target device comprises a terminal or a second communication device.

13. An information processing method, comprising:
obtaining, by a second communication device, second information, wherein the second information comprises at least one of the following: a first delay budget and a first access network delay budget; and
performing, by the second communication device, a second operation based on the second information, wherein the second operation comprises at least one of the following:
determining a second access network delay budget of a data packet in a data packet set;
performing an operation based on the first access network delay budget or the first delay budget; and
performing an operation based on the second access network delay budget or a second delay budget.

14. The method according to claim 13, wherein the determining a second access network delay budget of a data packet in a data packet set comprises at least one of the following:
determining a second access network delay budget of a second target data packet based on a value obtained by subtracting a third duration value from the first access network delay budget;
determining a second access network delay budget of the 1st data packet of a second data packet set based on a first access network delay; and
determining the second access network delay budget of the second target data packet based on the first access network delay;
wherein
the second target data packet is a data packet in the second data packet set; and
the third duration value is determined based on a value obtained by subtracting T4 from T5;
T4 is one of the following:
a receiving time at which the second communication device receives the 1st data packet of the second data packet set;
a time at which the 1st data packet of the second data packet set arrives at the second communication device; and
a time at which the 1st data packet in the second data packet set starts to wait for scheduling on a terminal; and
T5 is one of the following:
a receiving time at which the second communication device receives the second target data packet;
a time at which the second target data packet arrives at the second communication device; and
a time at which the second target data packet starts to wait for scheduling on the terminal.

15. The method according to claim 13, wherein the performing an operation based on the first access network delay budget or the first delay budget comprises at least one of the following:
based on a first delay budget or a first access network delay budget of the data packet set, determining at least one of the following for a data packet in the data packet set or the data packet set: a scheduling priority, a scheduling weight, a sending priority, and a sending weight;
based on a remaining duration of the first delay budget of the data packet set or a remaining duration of the first access network delay budget, determining at least one of the following for a data packet in the data packet set or the data packet set: a scheduling priority, a scheduling weight, a sending priority, and a sending weight;
configuring a link layer function based on the first delay budget or the first access network delay budget of the data packet set; and
starting counting for the first delay budget or the first access network delay budget from a time at which the first data packet of a data set or a target data packet arrives at a first communication device.

16. The method according to claim 13, wherein the performing an operation based on the second access network delay budget or a second delay budget comprises at least one of the following:
determining at least one of the following for a target data packet based on a second delay budget or a second access network delay budget of the target data packet: a scheduling priority, a scheduling weight, a sending priority, and a sending weight;
configuring a link layer function based on the second delay budget or the second access network delay budget of the target data packet;
determining at least one of the following for the target data packet based on a remaining duration of the second delay budget of the target data packet or a remaining duration of the second access network delay budget: a scheduling priority, a scheduling weight, a sending priority, and a sending weight; and
starting counting for the second delay budget or the second access network delay budget from a time at which the target data packet is received or a time at which the target data packet arrives at a first communication device;
wherein
the target data packet is a data packet in the data packet set.

17. The method according to claim 13, wherein the obtaining, by the second communication device, the first access network delay budget comprises at least one of the following:
obtaining, by the second communication device, the first access network delay budget from a first communication device or a core network device;
obtaining, by the second communication device, a first delay budget from the core network device, obtaining second core network delay information from the first communication device, and obtaining the first access network delay budget based on the second core network delay information and the first delay budget; and
obtaining, by the second communication device, the second core network delay information from the first communication device, and determining the first access network delay budget based on the second core network delay information and a first delay budget determined by the second communication device itself.

18. The method according to claim 15, wherein the performing an operation based on the first access network delay budget or the first delay budget further comprises:
performing an operation on the data packet of the data packet set or the data packet set based on a logical channel priority and the first access network delay budget or the first delay budget;
and/or
the performing an operation based on the second access network delay budget or the second delay budget comprises:
performing an operation on the data packet of the data packet set based on a logical channel priority and the second access network delay budget or the second delay budget.

19. An information processing method, comprising:
performing, by a third communication device, a third operation, wherein the third operation comprises at least one of the following:
adding T1 to a header of a data packet of a downlink data packet set; wherein
T1 is one of the following:
a sending time at which an anchor gateway sends the 1st data packet of a data packet set to a second target end;
a receiving time at which the anchor gateway receives the 1st data packet of the data packet set from an N6 interface;
a time at which the 1st data packet of the data packet set arrives at the anchor gateway;
a sending time at which the anchor gateway sends the 1st data packet of the downlink data packet set;
a receiving time at which the anchor gateway receives the 1st data packet of the downlink data packet set;
a sending time at which the anchor gateway sends a data packet to the second target end;
a receiving time at which the anchor gateway receives the data packet from the N6 interface;
a sending time at which the anchor gateway sends a downlink data packet; and
a receiving time at which the anchor gateway receives the downlink data packet;
wherein
the second target end comprises one of the following: a RAN, an N3 interface, and an N9 interface.

20. An information processing apparatus, applied to a first communication device and comprising:
a first obtaining module, configured to obtain first information, wherein the first information comprises at least one of the following: a first delay budget and second core network delay information; and
a first execution module, configured to perform a first operation based on the first information, wherein the first operation comprises at least one of the following:
determining the second core network delay information;
determining a first access network delay budget;
performing an operation based on the first access network delay budget or the first delay budget;
sending the first access network delay budget;
determining a second access network delay budget of data packets in a data packet set; and
performing an operation based on the second access network delay budget or a second delay budget; wherein
the second core network delay information comprises one of the following: the second core network delay budget and a second core network delay.

21. An information processing apparatus, applied to a second communication device and comprising:
a second obtaining module, configured to obtain second information, wherein the second information comprises at least one of the following: a first delay budget and a first access network delay budget; and
a second execution module, configured to perform a second operation based on the second information, wherein the second operation comprises at least one of the following:
determining a second access network delay budget of a data packet in a data packet set;
performing an operation based on the first access network delay budget or the first delay budget; and
performing an operation based on the second access network delay budget or a second delay budget.

22. An information processing apparatus, applied to a third communication device and comprising:
a third execution module, configured to perform a third operation, wherein the third operation comprises at least one of the following:
adding T1 to a header of a data packet of a downlink data packet set; wherein
T1 is one of the following:
a sending time at which an anchor gateway sends the 1st data packet of a data packet set to a second target end;
a receiving time at which the anchor gateway receives the 1st data packet of the data packet set from an N6 interface;
a time at which the 1st data packet of the data packet set arrives at the anchor gateway;
a sending time at which the anchor gateway sends the 1st data packet of the downlink data packet set;
a receiving time at which the anchor gateway receives the 1st data packet of the downlink data packet set;
a sending time at which the anchor gateway sends a data packet to the second target end;
a receiving time at which the anchor gateway receives the data packet from the N6 interface;
a sending time at which the anchor gateway sends a downlink data packet; and
a receiving time at which the anchor gateway receives the downlink data packet;
wherein
the second target end comprises one of the following: a RAN, an N3 interface, and an N9 interface.

23. A communication device, comprising a processor, a memory, and a computer program stored in the memory and executable by the processor, wherein when the computer program is executed by the processor, the steps of the information processing method according to any one of claims 1 to 12 are implemented, or the steps of the information processing method according to any one of claims 13 to 18 are implemented, or the steps of the information processing method according to claim 19 are implemented.

24. A computer-readable storage medium, wherein a computer program is stored in the computer-readable storage medium, and when the computer program is executed by a processor, the steps of the information processing method according to any one of claims 1 to 12 are implemented, or the steps of the information processing method according to any one of claims 13 to 18 are implemented, or the steps of the information processing method according to claim 19 are implemented.
